# EUROPÄISCHE PATENTSCHRIFT

(11) **EP 4 417 037 B1**
(45) Veröffentlichungstag und Bekanntmachung des Hinweises auf die Patenterteilung: **04.03.2026**
(21) Anmeldenummer: 23190906.0
(22) Anmeldetag: 10.08.2023
(51) Int. Cl.: A01F 15/07, A01F 15/10

(54) **SCHNEIDWERK FÜR HALMFÖRMIGES LANDWIRTSCHAFTLICHES ERNTEGUT**
CUTTING DEVICE FOR STALK-SHAPED AGRICULTURAL CROP
DISPOSITIF DE COUPE POUR RÉCOLTE AGRICOLE EN FORME DE TIGE

(30) Priorität: 16.02.2023 DE 202023100745 U
(43) Veröffentlichungstag der Anmeldung: 21.08.2024
(73) Patentinhaber: Deere & Company, Moline, IL 61265 (US)
(72) Erfinder: Chapon, Emmanuel, Mannheim (DE); Benoit-Guerindon, Florian, Mannheim (DE); Duitertre, Matthieu, Mannheim (DE)
(74) Vertreter: Stein, Stefan

(56) Entgegenhaltungen:
- EP-A1- 2 910 104
- US-A1- 2009 272 089
- US-B2- 7 404 284
- US-B2- 7 584 594
- US-B2- 9 226 452

## Beschreibung

Die Erfindung betrifft ein Schneidwerk für halmförmiges landwirtschaftliches Erntegut nach dem Oberbegriff des Anspruchs 1.

### Stand der Technik

Bei Halmguterntemaschinen, wie Ballenpressen und Ladewagen (siehe US 2022/266437), besteht in vielen Fällen ein Bedürfnis,
das landwirtschaftliche Erntegut vor der Einlagerung in kürzere Stücke zur zerschneiden. Dazu werden Schneidwerke mit einer Anzahl von seitlich nebeneinander angeordneten Messern verwendet, die sich in einen Kanal hineinerstrecken, in dem das Erntegut durch einen Förderrotor gefördert wird. In der Regel arbeitet der Förderrotor unterschlächtig und die Messer erstrecken sich von unten in den Kanal, aber auch die umgekehrte Anordnung ist möglich.

Bei einer gebräuchlichen Ausführungsform sind die Messer an ihren stromauf liegenden Enden jeweils einzeln um eine sich horizontal und quer zur Flussrichtung des Ernteguts erstreckende Achse drehbar abgestützt und werden durch eine Rolle in ihrer aktiven Position gehalten. Die Rolle dringt in eine Vertiefung ein, welche an der rückwärtigen Flanke des Messers eingebracht ist. Die Rolle ist durch die Kraft einer Feder in die Vertiefung hinein vorgespannt. Dadurch können die Messer nach unten ausweichen, wenn eine Überlastung vorliegt, z.B. wenn eine Verstopfung oder ein Fremdkörper (Stein, Metallteil o. dgl.) durch den Kanal läuft. Die Messer werden durch die Rolle und die Feder selbsttätig wieder zurück in den Kanal gestellt, sobald die Überlastung nicht mehr vorliegt. Derartige Schneidwerke werden beispielsweise in der DE 38 16 204 A1 und DE 43 02 199 A1 beschrieben.

Die Messer sind demnach durch die Feder und die Rolle in einer Arbeitsposition gehalten. Ein (erster) Aktor wirkt mit einem die Rolle haltenden Hebel zusammen und ermöglicht es, den Hebel derart zu drehen, dass die Rolle außer Eingriff mit der Vertiefung gelangt. Durch die Schwerkraft oder anströmendes Erntegut gelangt das Messer dann in die untere Ausweichposition. Auf diese Weise können einige oder alle Messer in eine unwirksame Stellung verbracht werden, je nach gewünschter Schnittlänge. Solange die Messer in der Arbeitsposition mit ihren Spitzen nicht an der oberen Wand des Kanals (DE 38 16 204 A1) oder an einem Abstreifer (EP 3 275 303 A1) anliegen, können sie aus der Arbeitsposition auch gegen die Kraft der Feder um einen gewissen Winkel nach oben ausweichen, da die Rückwand des Messers unterhalb der Ausbuchtung eine konvexe Form hat, vgl. DE 43 02 199 A1. Zu Wartungszwecken oder um eine Entfernung von Verstopfungen zu erleichtern, sind Ausführungsformen derartiger Schneidwerke an einem Gestell (einem sogenannten Fallboden, auf Englisch "drop floor" bezeichnet) angebracht, das an seinem stromauf liegenden Ende gegenüber dem Kanal um eine Querachse schwenkbar angelenkt ist (WO 2020/240427 A1). Durch einen (zweiten) Aktor kann das Gestell nach unten geschwenkt werden, was Wartungsarbeiten, wie einen Austausch der Messer oder einen Schleifvorgang, und ein Ausräumen von Verstopfungen ermöglicht. US 7,404,284 B2 offenbart eine Ballenpresse mit einer gemeinsam mit einer Leitfläche absenkbaren als auch quer zu der Förderrichtung verschiebbare Schneidvorrichtung. Die Schneidvorrichtung ist gegenüber der Leitfläche verstellbar.

### Aufgabe

Im Stand der Technik, bei dem das schwenkbare Gestell mit den daran befestigten Messern in eine nach unten verschwenkte Wartungsstellung verbringbar ist, vgl. WO 2020/240427 A1, besteht die Gefahr, dass sich Erntegut zwischen einerseits dem Rotor und/oder den Schlitzen im Gestell, durch die sich die Messer nach oben erstrecken, und andererseits einem oder mehreren der Messer verklemmt. Wenn dann das Gestell durch den (zweiten) Aktor aus der Betriebsposition nach unten in die Wartungsposition verschwenkt wird, werden die Messer beim Schwenken des Gestells noch weiter nach oben gezogen, da sie durch das Erntegut festgehalten werden. Auch wenn die Rolle durch den (ersten) Aktor aus der Vertiefung gezogen wird, bewegen sich die verklemmten Messer nicht nach unten, sondern bleiben in der besagten, gegenüber der Arbeitsposition noch angehobenen Stellung. Das hat zur nachteiligen Folge, dass die verklemmten Messer beim Anheben des Gestells an den Rotor anschlagen und diesen und sich selbst beschädigen. Wenn die Rolle nicht durch den Aktor aus der Vertiefung gezogen wird, kann die Rolle sogar an in Anlage an die Unterseite des Messers gelangen, was das Messer in der besagten Stellung arretiert und beim Anheben des Gestells erst recht zu Schäden an Messer und Rotor führt.

Eine Bewegung der Messer aus der Arbeitsposition in die besagte, noch weiter als in der Arbeitsposition von der aus dem Kanal ausgeschwenkten Position kann, solange diese Bewegung nicht durch andere Mittel unterbunden wird (DE 38 16 204 A1, EP 3 275 303 A1), die jedoch einen zusätzlichen Aufwand mit sich bringen und den Querschnitt des Kanals einschränken, auch dann auftreten, wenn das Erntegut im Kanal rückwärts gefördert wird, z.B., um durch Reversieren einen Stau zu beseitigen. In derartigen Fällen kann sich das Messer z.B. an einem Rotor verklemmen.

Das der Erfindung zugrunde liegende Problem wird darin gesehen, zumindest einige der besagten Nachteile zu vermeiden.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Schneidwerk für halmförmiges landwirtschaftliches Erntegut umfasst somit eine Anzahl Messer, die quer zu einem im normalen Betrieb in einer Flussrichtung von Erntegut durchströmbaren Kanal nebeneinander angeordnet und an der stromauf im Kanal gelegenen Seite der Messer um eine sich quer zum Kanal erstreckende Schwenkachse zwischen einer Arbeitsposition und einer aus dem Kanal ausgeschwenkten Position schwenkbar an einem Gestell des Schneidwerks angelenkt sind. Die Bewegung des Messers aus der Arbeitsposition in den Kanal hinein (d.h. noch weiter als in der Arbeitsposition von der aus dem Kanal ausgeschwenkten Position hinfort) ist durch einen mit dem Gestell fest verbundenen Anschlag begrenzt, der mit einer Kante des Messers zusammenwirkt. Die mit dem Anschlag zusammenwirkende Kante des Messers ist an dessen stromauf liegender Seite und oberhalb der Schwenkachse angeordnet.

Den Messern sind Hebel zugeordnet, die um eine parallel zur Schwenkachse verlaufende Achse drehbar am Gestell abgestützt und zwischen einer Arbeitsposition, in der sie das ihnen zugeordnete Messer in einer aktiven Position halten, in der es sich in den Kanal erstreckt, und einer Außerbetriebsposition um die Achse beweglich sind, in der sie das Messer nicht in der aktiven Position halten, und den Hebeln sind Federn zugeordnet, die den zugehörigen Hebel in die Arbeitsposition vorspannen, wobei die Messer an ihrer von der Schwenkachse beabstandeten rückwärtigen Kante mit einer Einbuchtung versehen sind, in welche in der Arbeitsposition der Messer eine mit dem Hebel gekoppelte Rolle eingreift und die Einbuchtung derart geformt ist, dass das jeweilige Messer bei in Flussrichtung auf das Messer wirkenden Kräften, die einen definierten Schwellenwert überschreiten, aus der Arbeitsposition gegen die Kraft der Feder aus dem Kanal hinaus und bei entgegen der Flussrichtung auf das Messer wirkenden Kräften, die einen definierten Schwellenwert überschreiten, aus der Arbeitsposition gegen die Kraft der Feder in den Kanal hinein beweglich ist.

Auf diese Weise vermeidet man mit geringem Aufwand, dass das Messer in eine ungeeignete Position gelangt, z.B. beim Reversieren oder beim Ausschwenken des Gestells. Dadurch vermeidet oder vermindert man die eingangs diskutierten Probleme.

Alle oder ein Teil der Hebel können durch einen ersten Aktor in eine Position bewegbar sein, in welcher die Rolle außer Eingriff mit der zugehörigen Einbuchtung ist.

Dem Schneidwerk gegenüberliegend kann im Kanal ein Förderrotor angeordnet sein, zwischen dessen Zinken die Messer des Schneidwerks in der Arbeitsposition eingreifen.

Das Gestell kann gegenüber dem Kanal zwischen einer Betriebsposition, in der es dem Kanal angrenzend benachbart ist, und einer vom Kanal beabstandeten Wartungsposition beweglich sein. Das Gestell ist insbesondere an seiner stromauf liegenden Seite gegenüber dem Kanal schwenkbar an einem Rahmen der Halmguterntemaschine gelagert. Das Gestell kann durch einen zweiten Aktor zwischen der Betriebsposition und der Wartungsposition beweglich sein. Der erste Aktor und der zweite Aktor können mit einer Steuerung verbunden sein, die konfiguriert ist, auf eine Anweisung zum Verbringen des Gestells in die Wartungsposition hin den ersten Aktor anzuweisen, die Messer in die ausgeschwenkte Position zu verbringen und in einem vorgegebenen zeitlichen oder räumlichen (d.h. von der jeweiligen Position des Aktors oder des davon bewegten Gestells bzw. des Hebels abhängigen) Zusammenhang damit den zweiten Aktor anzuweisen, das Gestell in die Wartungsposition zu verbringen.

Das erfindungsgemäße Schneidwerk kann an beliebigen Erntemaschinen für die Halmguternte verwendet werden. Beispiele sind Ladewagen und Ballenpressen für runde oder rechteckige Ballen.

### Ausführungsbeispiel

In den Zeichnungen ist ein nachfolgend näher beschriebenes Ausführungsbeispiel der Erfindung dargestellt. Es zeigt:
Fig. 1 eine schematische seitliche Ansicht einer Rundballenpresse mit einem Schneidwerk,
Fig. 2 eine seitliche Ansicht des Schneidwerks mit in der Arbeitsposition befindlichem Messer,
Fig. 3 eine Ansicht nach Fig. 2, jedoch mit abgesenktem Gestell des Schneidwerks,
Fig. 4 einen vergrößerten Ausschnitt aus der Fig. 2,
Fig. 5 eine Ansicht des Schneidwerks mit einem aus der Arbeitsposition nach oben bewegten Messer, das an einem vorderen Anschlag anliegt, und
Fig. 6 einen vergrößerten Ausschnitt aus der Fig. 5.

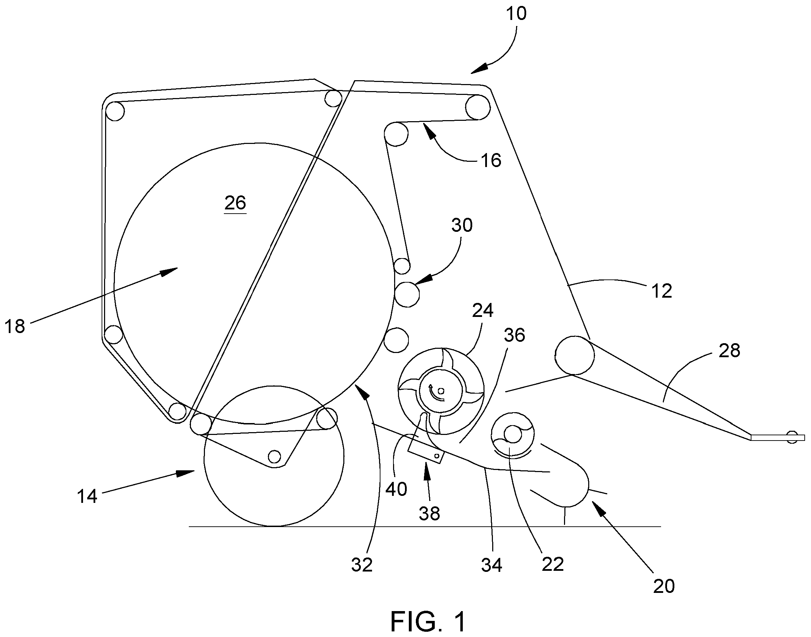

Eine in der Figur 1 gezeigte Ballenpresse 10 weist einen Aufbau 12, ein Fahrgestell 14, Presselemente 16, einen Pressraum 18, einen Aufnehmer 20, einen Querförderer 22 und einen Förderrotor 24 auf. Die Ballenpresse 10 steht hier stellvertretend für jede Bauart einer Ballenpresse, d.h. als Rundballenpresse mit festem oder variablem Pressraumvolumen, mit Riemen, Rollen oder Ketten, als Quaderballenpresse, in der Landwirtschaft, in der Industrie oder im Gewerbe, etc. Im herkömmlichen Fall wird eine solche Ballenpresse 10 über ein Feld gezogen, um halmförmiges Erntegut, z.B. Stroh, Heu oder Silage vom Boden aufzunehmen und es dem Pressraum 18 oder einem Laderaum eines Ladewagens zuzuführen, um darin z.B. einen Ballen 26 zu bilden oder das Erntegut zu speichern und an geeigneter Stelle abzuladen. Der Aufbau 12 enthält Wände und Streben, die auf dem Fahrgestell 14 ruhen und mittels einer Deichsel 28 an ein Fahrzeug, z.B. einen Ackerschlepper anschließbar sind. Das Fahrgestell 14 besteht aus einer Achse und Rädern in herkömmlicher Weise.

Die Presselemente 16 werden bei dem dargestellten Ausführungsbeispiel von Riemen gebildet, die über Rollen 30 geführt oder mit diesen kombiniert sind. Diese Presselemente 16 belassen einen Abstand, um einen Einlass 32 für das Erntegut in den Pressraum 18 zu bilden. Die Presselemente 16 können in beiden Richtungen umlaufen. Der Pressraum 18 ist in diesem Ausführungsbeispiel in konstanter Größe ausgebildet, kann aber beliebig ausgeführt werden.

Der Aufnehmer 20, eine sogenannte Pick-up, nimmt Erntegut vom Boden auf, das in einem Schwad von sich ändernder Stärke und Größe abgelegt ist und auf dem Weg zu dem Pressraum 18 auf eine schmalere Breite zusammengeführt wird. Der Aufnehmer 20 arbeitet oberschlächtig. Das von ihm aufgenommene Erntegut wird mittels des an seiner Abgabeseite angeordneten Querförderers 22 zusammengeführt, bei dem es sich um eine Querförderschnecke handelt, die sich aus einem zentralen Rohr und um das Rohr gewickelten Wendeln zusammensetzt. Der Querförderer 22 übergibt das Erntegut dann an den unterschlächtig arbeitenden Förderrotor 24, der ein zentrales Rohr und daran befestigte Mitnehmer aufweist und es in den Einlass 32 fördert. Unterhalb des Querförderers 22 und des Förderrotors 24 befindet sich eine starre Wand 34, an deren Oberseite das Erntegut entlang gefördert wird. Zwischen der Wand 34 und dem Förderrotor 24 befindet sich demnach ein Kanal 36, durch den das Erntegut gefördert wird.

In den Kanal 36 können wahlweise Messer 40 eines Schneidwerks 38 eingefügt werden, um das Erntegut in kürzere Stücke zu zerteilen. Das Schneidwerk 38 umfasst mehrere seitlich (quer zur Flussrichtung des Ernteguts) nebeneinander angeordnete Messer 40, von denen durch einen an sich bekannten Mechanismus eine Teilanzahl oder alle oder keine in den Kanal 36 eingebracht werden können. Die Messer 40 greifen, wenn sie sich in der Arbeitsposition befinden, jeweils zwischen zwei Zinken 82 des Förderrotors 24 ein.

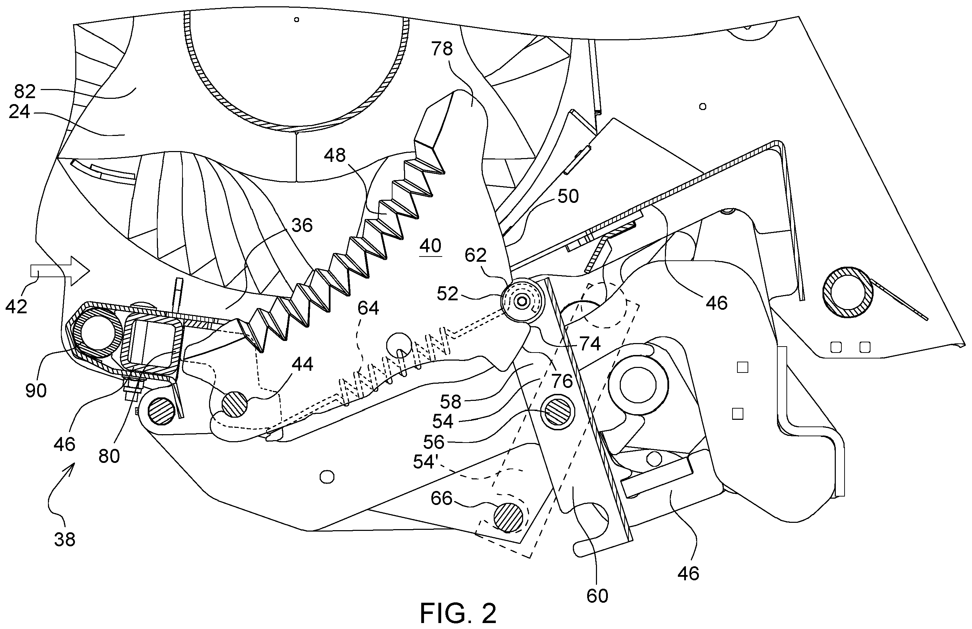

In der Figur 2 ist das Schneidwerk 38 in einer Situation dargestellt, in der sich ein Messer 40 in der Arbeitsposition befindet, in der es sich in den Kanal 36 hinein erstreckt. Die Flussrichtung des Ernteguts im normalen Erntebetrieb ist in den Figuren 2 bis 6 nach rechts gerichtet und in der Figur 1 nach links. Das Messer 40 ist an seinen bezüglich der durch den Pfeil 42 gekennzeichneten Flussrichtung des Ernteguts stromauf liegenden Ende um eine Schwenkachse 44 schwenkbar am Gestell 46 des Schneidwerks 38 abgestützt. Die Schwenkachse 44 erstreckt sich horizontal und quer zur Vorwärtsrichtung der Ballenpresse 10 und somit quer zum Kanal 36. Das in seiner Gesamtheit etwa dreieckförmige Messer 40 umfasst an seiner Oberseite eine geschärfte, gezahnte Schneidkante 48, die sich in den Kanal 36 hinein erstreckt, um das Erntegut zu schneiden. Am unteren Ende seiner rückwärtigen Kante 50 umfasst das Messer 40 eine Einbuchtung 52.

Eine der Anzahl der Messer 40 entsprechende Anzahl an Hebeln 54 ist einzeln um eine sich parallel zur Schwenkachse 44 verlaufende Achse 56 drehbar am Rahmen oder Aufbau 12 der Ballenpresse 10 abgestützt und umfassen jeweils einen ersten, oberen Arm 58 und einen zweiten, unteren Arm 60, zwischen denen sich die Achse 54 befindet. Am oberen Ende des ersten Arms 58 ist eine Rolle 62 um eine parallel zur Achse 54 verlaufende Achse drehbar befestigt. Jedem Hebel 54 ist auch eine Feder 64 zugeordnet, welche die Rolle 62 in Richtung auf die rückwärtige Kante 50 des Messers 40 vorspannt, so dass die Rolle 62 in der Einbuchtung 50 gehalten wird. Anders als dargestellt, kann die Feder 64 den zweiten Arm 60 nach rechts drücken oder ziehen oder den ersten Arm 58 nach links drücken. Eine Anzahl an Hebeln 54 kann wahlweise durch einen geeigneten Mechanismus mit einem Stift 66, der mit dem Hebel 54 zusammenwirkt und an einer drehbaren Halterung 86 angebracht ist, welche durch einen ersten Aktor 84 in eine Außerbetriebsposition verbracht werden, in welcher sie und die zugehörigen Messer 40 sich außerhalb des Kanals 38 befinden, wie anhand des Hebels 54' in der Figur 2 angedeutet. Ein geeigneter Mechanismus ist beispielsweise auch in der EP 2 110 014 A1 offenbart.

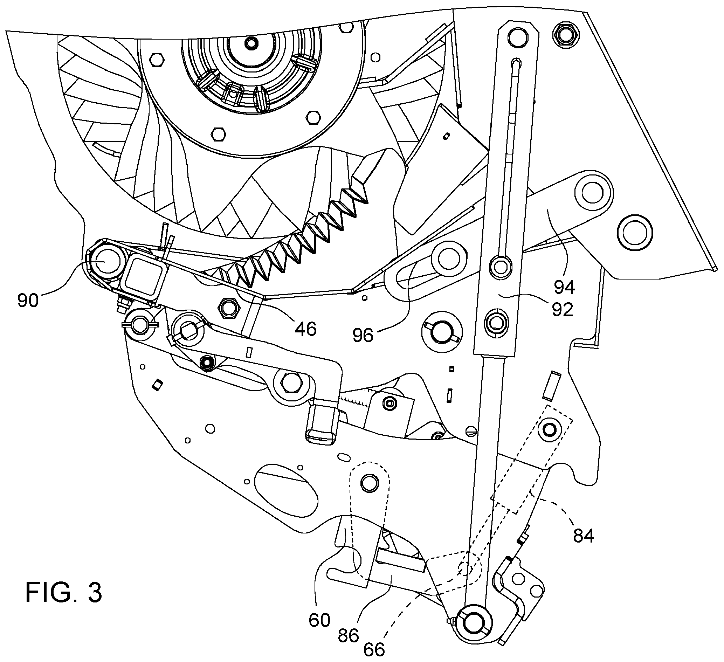

Das Schneidwerk 38 umfasst das Gestell 46, das an seinem stromauf liegenden Ende an einer Drehachse 90 schwenkbar am Aufbau 12 der Ballenpresse 10 angelenkt ist und die beschriebenen Komponenten des Schneidwerks 38 abstützt. Die Drehachse 90 erstreckt sich am (bezüglich der beim normalen Betrieb geltenden Flussrichtung des Ernteguts) stromauf liegenden Ende des Schneidwerks 38 horizontal und quer zum Kanal 36. Ein zweiter Aktor 92 ist am Aufbau 12 und am Gestell 46 angelenkt und dient dazu, das Gestell 46 des Schneidwerks 38 um die Drehachse 90 zu verschwenken, zwischen der in Figur 2 gezeigten Betriebsposition und der in Figur 3 gezeigten Wartungsposition. Ein am Gestell 46 und am Aufbau 12 angelenkter Begrenzer 94 mit einem Langloch 96 begrenzt den Weg des Gestells 46 nach unten.

Die Aktoren 84 und 92 sind vorzugsweise als Hydraulikzylinder ausgeführt. Sie können durch eine geeignete elektronische Steuerung, die beispielsweise auf einem die Ballenpresse 10 ziehenden Ackerschlepper angeordnet ist, und eine geeignete Hydraulik angesteuert werden. Der Bediener des Ackerschleppers kann somit über eine Bedienerschnittstelle den ersten Aktor 84 ansteuern, um die Messer 40 ein- und auszuschwenken, um die Schnittlänge des Ernteguts zu variieren. Auch kann der Bediener über die Bedienerschnittstelle den zweiten Aktor 92 anweisen, das Gestell 46 des Schneidwerks 38 in die in Figur 3 gezeigte Wartungsposition zu verbringen, wenn er Wartungsarbeiten daran durchführen oder einen Erntegutstau beseitigen möchte. Die Steuerung wird in diesem Fall zuerst den ersten Aktor 84 veranlassen, die Messer 40 aus dem Kanal 36 zu schwenken und anschließend (zeit- oder positionsgesteuert, d.h. mittels eines Sensors die Position des ersten Aktors 84 erfassend) den zweiten Aktor 92 aktivieren. Das Wiedereinschwenken des Gestells 46 erfolgt analog in umgekehrter Richtung und erst anschließend werden bei Bedarf die Messer 40 in den Kanal 36 geschwenkt.

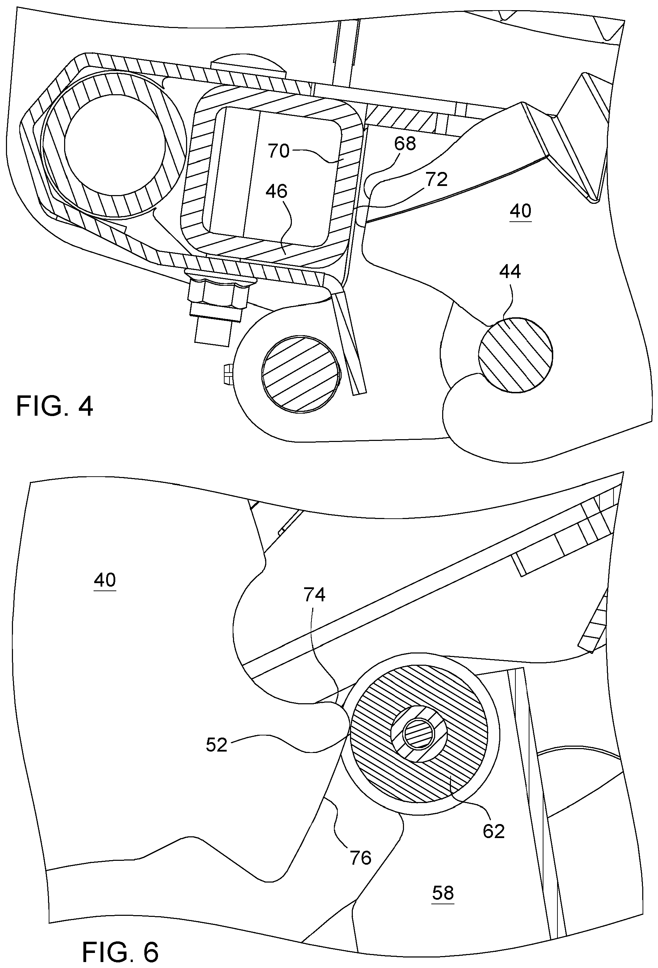

Das Messer 40 kann im Fall, dass eine Überlast auf das Messer 40 wirkt, z.B. wenn ein Fremdkörper oder verstopftes Erntegut durch den Kanal 38 strömt, gegen die Kraft der Feder 64 nach unten ausweichen und wird selbsttätig durch die Feder 64 wieder in den Kanal 36 zurückgebracht, nachdem die Überlast nicht mehr auf das Messer 40 wirkt. Dabei läuft die Rolle 62 an der rückwärtigen Kante 50 des Messers 40 oberhalb der Einbuchtung 52 entlang. Unterhalb der Einbuchtung 52 ist die rückwärtige Kante 50 mit einer Nase 74 und einer sich davon schräg nach vorn und unten erstreckenden Kante 76 ausgestattet. Die Nase 74 und die Kante 76 ermöglichen dem Messer 40 im Zusammenwirken mit der Rolle 62 auch eine Bewegung aus der Arbeitsposition nach oben, wie in der Figur 4 gezeigt.

Es wird nun auf die Figur 4 verwiesen, anhand derer erkennbar ist, dass eine vordere Kante 68 des Messers 40, wenn es sich in der Arbeitsposition befindet, mit einem durch eine vordere Querstrebe 80 des Gestells 46 gebildeten oder damit verbundenen angeordneten Anschlag 70 eine gewisse Lücke 72 bildet.

Wenn nun das Messer 40 sich aus der Arbeitsposition, wie sie in den Figuren 2 und 4 gezeigt ist, nach oben ausweichen sollte, z.B. wenn der Rotor 24 nach einer Verstopfung reversiert wird und das verstopfte Material die rückwärtige Kante 50 und/oder eine obere Ecke 78 des Messers 40 nach links und oben drückt, ergibt sich die Situation nach Figur 4. Diese Situation kann sich auch ergeben, wenn die Hebel 54 durch den ersten Aktor 84 in die gestrichelte Stellung der Figur 2 gebracht wird, um die Messer 40 aus der Arbeitsposition in die zurückgezogene Position zu verbringen und die Messer 40 durch Erntegut mit dem Rotor 24 oder mit einem Schlitz im Boden 90 des Gestells 46 verklemmt sind, und dann durch den Aktor 92 das Gestell 46 abgesenkt und wieder angehoben wird. Dann liegt die Rolle 62 an der sich schräg nach vorn und unten erstreckenden Kante 76 an und die vordere Kante 68 des Messers 40 liegt am Anschlag 70 an. Auf diese Weise wird die Bewegung des Messers 40 nach oben, in den Kanal 36 hinein, durch den Anschlag 70 und die vordere Kante 68 begrenzt, insbesondere wenn das Gestell 46 aus der Wartungsposition der Figur 3 wieder in die Betriebsposition nach Figur 2 verbracht wird. Ein Verklemmen des Messers 40 mit dem Rotor 24 oder ein Anschlagen des Messers 40 an den Rotor 24 ist somit nicht mehr zu befürchten. Ein Rückstellen des Messers 40 nach Auflösung der Verstopfung o.ä. ist möglich, wenn der Hebel 54 in die Außerbetriebsposition verbracht wird. Dann kann das Messer 40 durch die Schwerkraft oder anströmendes Erntegut zunächst in die Außerbetriebsstellung gelangen und anschließend mittels des Hebels 54 wieder in die Arbeitsposition gebracht werden.

Anhand der Figur 6 ist erkennbar, dass die Position und Form der Oberseite der Nase 74 die Kraft bzw. das Drehmoment definiert, bei der oder dem das Messer 40 in die Position nach Figur 4 gelangt, und die sich von der Nase 74 geradlinig und schräg nach vorn und unten erstreckende Kante 76 festlegt, mit welcher Kraft oder welchem Drehmoment das Messer 74 am Anschlag 70 anliegt.

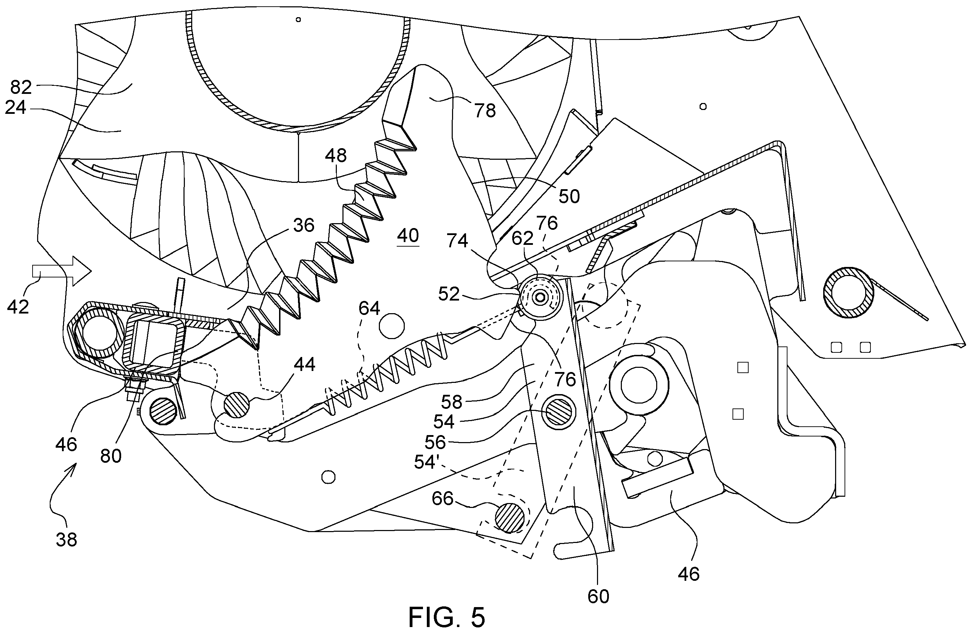

Bei der dargestellten Ausführungsform verbleibt das Messer 40 somit, wenn es einmal in die Position nach Figur 5 gelangt ist, in dieser Stellung, bis die Hebel 54 wieder durch den ersten Aktor 84 in die in Figur 2 gestrichelt eingezeichnete Position verbracht werden. Wenn man unterhalb der Einbuchtung 52 eine im Stand der Technik übliche Form der Messer verwendet, die ohne Nase 74 ist und unterhalb der Einbuchtung 52 schräg nach hinten und unten verläuft (wie in der Figur 2 von DE 43 02 199 A1 gezeigt), kann die Rückstellung des Messers in die Arbeitsposition nach Entfall der es nach oben drehenden Kraft auch selbsttätig durch die Kraft der Feder 64 erfolgen.

## Patentansprüche

1. Schneidwerk (38) für halmförmiges landwirtschaftliches Erntegut, umfassend eine Anzahl Messer (40), die quer zu einem im normalen Betrieb in einer Flussrichtung (42) von Erntegut durchströmbaren Kanal (36) nebeneinander angeordnet und an der stromauf im Kanal (36) gelegenen Seite der Messer (40) um eine sich quer zum Kanal (36) erstreckende Schwenkachse (44) zwischen einer Arbeitsposition und einer aus dem Kanal (36) ausgeschwenkten Position schwenkbar an einem Gestell (46) des Schneidwerks (38) angelenkt sind, und das Schneidwerk den Messern (44) zugeordnete Hebel (54) umfasst, die um eine parallel zur Schwenkachse (44) verlaufende Achse (56) drehbar am Gestell (46) abgestützt und zwischen einer Arbeitsposition, in der sie das ihnen zugeordnete Messer (40) in einer aktiven Position halten, in der es sich in den Kanal (36) erstreckt, und einer Außerbetriebsposition um die Achse (56) beweglich sind, in der sie das Messer (40) nicht in der aktiven Position halten, und den Hebeln (52) zugeordnete Federn (64), die den zugehörigen Hebel (52) in die Arbeitsposition vorspannen, wobei die mit dem Anschlag (70) zusammenwirkende Kante (68) des Messers (40) an dessen stromauf liegender Seite und oberhalb der Schwenkachse (44) angeordnet ist, **dadurch gekennzeichnet, dass** die Messer (40) an ihrer von der Schwenkachse (44) beabstandeten rückwärtigen Kante (50) mit einer Einbuchtung (52) versehen sind, in welche in der Arbeitsposition der Messer (40) eine mit dem Hebel (54) gekoppelte Rolle (62) eingreift und die Einbuchtung (52) derart geformt ist, dass das jeweilige Messer (40) bei in Flussrichtung auf das Messer (40) wirkenden Kräften, die einen definierten Schwellenwert überschreiten, aus der Arbeitsposition gegen die Kraft der Feder (64) aus dem Kanal (36) hinaus und bei entgegen der Flussrichtung auf das Messer (40) wirkenden Kräften, die einen definierten Schwellenwert überschreiten, aus der Arbeitsposition gegen die Kraft der Feder (64) in den Kanal (36) hinein beweglich ist.

2. Schneidwerk (38) nach Anspruch 1, wobei alle oder ein Teil der Hebel (52) durch einen ersten Aktor (84) in eine Position bewegbar sind, in welcher die Rolle (62) außer Eingriff mit der zugehörigen Einbuchtung (62) ist.

3. Schneidwerk (38) nach einem der vorhergehenden Ansprüche, wobei dem Schneidwerk (38) gegenüberliegend im Kanal (36) ein Förderrotor (24) angeordnet ist, zwischen dessen Zinken (82) die Messer (40) des Schneidwerks (38) in der Arbeitsposition eingreifen.

4. Schneidwerk (38) nach einem der vorhergehenden Ansprüche, wobei das Gestell (46) gegenüber dem Kanal (36) zwischen einer Betriebsposition, in der es dem Kanal (36) angrenzend benachbart ist, und einer vom Kanal (36) beabstandeten Wartungsposition beweglich ist.

5. Schneidwerk (38) nach Anspruch 4, wobei das Gestell (46) an seiner stromauf liegenden Seite gegenüber dem Kanal (36) schwenkbar ist.

6. Schneidwerk (38) nach Anspruch 4 oder 5, wobei das Gestell (46) durch einen zweiten Aktor (92) zwischen der Betriebsposition und der Wartungsposition beweglich ist.

7. Schneidwerk (38) nach Anspruch 6, wenn zurückbezogen auf den Anspruch 4, wobei der erste Aktor (84) und der zweite Aktor (92) mit einer Steuerung verbunden sind, die konfiguriert ist, auf eine Anweisung zum Verbringen des Gestells (46) in die Wartungsposition hin den ersten Aktor (84) anzuweisen, die Messer (40) in die ausgeschwenkte Position zu verbringen und in einem vorgegebenen zeitlichen oder räumlichen Zusammenhang damit den zweiten Aktor (94) anzuweisen, das Gestell (46) in die Wartungsposition zu verbringen.

8. Halmguterntemaschine, insbesondere Ballenpresse (10) oder Ladewagen, mit einem Schneidwerk (38) nach einem der Ansprüche 1 bis 7.

## Claims

1. Cutting unit (38) for stalk-shaped agricultural crops, comprising a number of blades (40) which are arranged next to one another transversely with respect to a channel (36), through which crops can flow in a flow direction (42) in normal operation, and are articulated on a frame (46) of the cutting unit (38) on that side of the blades (40) located upstream in the channel (36) pivotably about a pivot axis (44) extending transversely with respect to the channel (36) between a working position and a position, in which they are swung out of the channel (36), and the cutting unit comprises levers (54) which are assigned to the blades (44) and are supported on the frame (46) rotatably about an axis (56) running parallel to the pivot axis (44) and are movable about the axis (56) between a working position, in which they hold the blade (40) assigned to them in an active position, in which it extends into the channel (36), and a non-operational position, in which they do not hold the blade (40) in the active position, and the cutting unit further comprises springs (64) which are assigned to the levers (52) and preload the assigned lever (52) into the working position, wherein that edge (68) of the blade (40) which interacts with the stop (70) is arranged on its upstream side and above the pivot axis (44), **characterized in that** the blades (40) are provided with a recess (52) on their rear edge (50) which is spaced apart from the pivot axis (44), into which recess a roller (62) coupled to the lever (54) engages in the working position of the blades (40), and the recess (52) is formed in such a way that the respective blade (40) can be moved, in the case of forces which act on the blade (40) in the flow direction and exceed a defined threshold value, from the working position counter to the force of the springs (64) out of the channel (36) and, in the case of forces which act on the blade (40) counter to the flow direction and exceed a defined threshold value, from the working position counter to the force of the springs (64) into the channel (36).

2. Cutting unit (38) according to Claim 1, wherein all or part of the levers (52) are movable by a first actuator (84) into a position, in which the roller (62) is out of engagement with the associated recess (62).

3. Cutting unit (38) according to either of the preceding claims, wherein a feed rotor (24) is arranged in the channel (36) so as to lie opposite the cutting unit (38), between the tines (82) of which feed rotor the blades (40) of the cutting unit (38) engage in the working position.

4. Cutting unit (38) according to one of the preceding claims, wherein the frame (46) is movable relative to the channel (36) between an operating position, in which it is adjacent to the channel (36), and a maintenance position, in which it is spaced apart from the channel (36).

5. Cutting unit (38) according to Claim 4, wherein the frame (46) is pivotable on its upstream side relative to the channel (36).

6. Cutting unit (38) according to Claim 4 or 5, wherein the frame (46) is movable by a second actuator (92) between the operating position and the maintenance position.

7. Cutting unit (38) according to Claim 6, when referring back to Claim 4, wherein the first actuator (84) and the second actuator (92) are connected to a controller which is configured to instruct the first actuator (84) to move the frame (46) into the maintenance position, to move the blades (40) into the swung-out position and, in a predetermined temporal or spatial context, to therefore instruct the second actuator (94) to move the frame (46) into the maintenance position.

8. Stalk crop harvester, in particular baler (10) or loading vehicle, having a cutting unit (38) according to one of Claims 1 to 7.

## Revendications

1. Mécanisme de coupe (38) pour des produits de récolte agricoles en forme de paille, comprenant un certain nombre de couteaux (40), qui sont disposés côte à côte transversalement à un canal (36) pouvant être traversé par un produit de récolte dans une direction d'écoulement (42) en fonctionnement normal et sont articulés sur un châssis (46) du mécanisme de coupe (38) de manière à pouvoir pivoter entre une position de travail et une position sortie du canal (36) par pivotement autour d'un axe de pivotement (44) s'étendant transversalement au canal (36) sur le côté des couteaux (40) placé en amont dans le canal (36), et des leviers (54) associés aux couteaux (44), qui prennent appui sur le châssis (46) de manière à pouvoir tourner autour d'un axe (56) s'étendant parallèlement à l'axe de pivotement (44) et peuvent être déplacés entre une position de travail, dans laquelle ils maintiennent le couteau (40) qui leur est associé dans une position active dans laquelle il s'étend dans le canal (36), et une position de mise hors service autour de l'axe (56), dans laquelle ils ne maintiennent pas le couteau (40) dans la position active, et des ressorts (64) associés aux leviers (52), qui précontraignent le levier (52) associé dans la position de travail, le bord (68) du couteau (40) coopérant avec la butée (70) étant disposé sur son côté situé en amont et au-dessus de l'axe de pivotement (44), **caractérisé en ce que** les couteaux (40) sont pourvus d'une échancrure (52) sur leur bord arrière (50) espacée de l'axe de pivotement (44), avec laquelle un galet (62) couplé au levier (54) vient en prise dans la position de travail des couteaux (40) et l'échancrure (52) est formée de telle manière que le couteau (40) respectif peut être déplacé hors du canal (36) contre la force du ressort (64) hors de la position de travail en cas de forces agissant sur le couteau (40) dans la direction d'écoulement, qui dépassent une valeur de seuil définie, et dans le canal (36) contre la force du ressort (64) hors de la position de travail en cas de force agissant dans la direction opposée à la direction d'écoulement sur le couteau (40), qui dépassent une valeur seuil définie.

2. Mécanisme de coupe (38) selon la revendication 1, la totalité ou une partie des leviers (52) pouvant être déplacés par un premier actionneur (84) dans une position, dans laquelle le galet (62) n'est pas en prise avec l'échancrure (62) associée.

3. Mécanisme de coupe (38) selon l'une des revendications précédentes, un rotor de convoyage (24), entre les dents (82) duquel les couteaux (40) du mécanisme de coupe (38) viennent en prise dans la position de travail, étant disposé dans le canal (36) en vis-à-vis du mécanisme de coupe (38).

4. Mécanisme de coupe (38) selon l'une des revendications précédentes, le châssis (46) étant mobile par rapport au canal (36) entre une position de fonctionnement, dans laquelle il est adjacent au canal (36), et une position de maintenance espacée du canal (36).

5. Mécanisme de coupe (38) selon la revendication 4, le châssis (46) pouvant pivoter sur son côté situé en amont par rapport au canal (36).

6. Mécanisme de coupe (38) selon la revendication 4 ou 5, le châssis (46) pouvant être déplacé par un deuxième actionneur (92) entre la position de fonctionnement et la position de maintenance.

7. Mécanisme de découpe (38) selon la revendication 6, si elle renvoie à la revendication 4, le premier actionneur (84) et le deuxième actionneur (92) étant reliés à une commande qui est configurée pour ordonner au premier actionneur (84), à réception d'une instruction pour amener le châssis (46) dans la position de maintenance, d'amener les couteaux (40) dans la position sortie par pivotement et pour ordonner, dans un contexte temporel ou spatial prédéfini, ainsi au deuxième actionneur (94) d'amener le châssis (46) dans la position de maintenance.

8. Machine à récolter de la paille, en particulier presse à balles (10) ou chariot de chargement, avec un mécanisme de coupe (38) selon l'une des revendications 1 à 7.
